(19) Europäisches Patentamt / European Patent Office / Office européen des brevets

(11) **EP 2 989 644 B1**

(12) **FASCICULE DE BREVET EUROPEEN**

(45) Date de publication et mention de la délivrance du brevet:
**07.06.2017 Bulletin 2017/23**

(21) Numéro de dépôt: **14718966.6**

(22) Date de dépôt: **18.04.2014**

(51) Int Cl.:
**B23K 9/08** *(2006.01)*      **B23K 9/09** *(2006.01)*
**G11B 9/04** *(2006.01)*      **G11B 13/04** *(2006.01)*
**H01C 17/26** *(2006.01)*

(86) Numéro de dépôt international:
**PCT/EP2014/058007**

(87) Numéro de publication internationale:
**WO 2014/173841 (30.10.2014 Gazette 2014/44)**

(54) **PROCÉDÉ DE MODIFICATION DE LA VALEUR D'UNE RÉSISTANCE ÉLECTRIQUE COMPORTANT UN MATÉRIAU FERROMAGNÉTIQUE**

VERFAHREN ZUR ÄNDERUNG DES WERTES EINES ELEKTRISCHEN WIDERSTANDS, DER EINEN FERROMAGNETISCHEN MATERIAL BEINHALTET

METHOD FOR MODIFYING THE VALUE OF AN ELECTRICAL RESISTANCE WHICH COMPRISES A FERROMAGNTIC MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.04.2013 FR 1353651**

(43) Date de publication de la demande:
**02.03.2016 Bulletin 2016/09**

(73) Titulaire: **Centre National de la Recherche Scientifique**
**75016 Paris (FR)**

(72) Inventeurs:
• **BIGOT, Jean-Yves**
  **F-67000 Strasbourg (FR)**
• **VOMIR, Mircea**
  **67206 Mittelhausbergen (FR)**
• **ALBRECHT, Michèle**
  **F-67055 Vendenheim (FR)**

(74) Mandataire: **Brevalex**
**95, rue d'Amsterdam**
**75378 Paris Cedex 8 (FR)**

(56) Documents cités:
WO-A1-02/082111      US-A- 5 916 459
US-A1- 2002 029 462      US-A1- 2011 170 339
US-B1- 6 377 414

**Description**

## DOMAINE TECHNIQUE ET ART ANTÉRIEUR

L'invention concerne le domaine technique de l'électronique, plus précisément celui de la photonique de spins.

En électronique, l'information est transportée par l'intermédiaire de charges électriques. Dans les années 1990, des recherches ont permis de démontrer qu'il est également possible d'utiliser le moment magnétique des charges électriques, également appelé spin, pour coder et transporter de l'information. Par exemple, le moment magnétique d'un électron peut prendre deux valeurs opposées dénommées « spin up » ou « spin down ». Cette nouvelle branche de la physique appelée l'électronique de spin ou spintronique a permis la réalisation de dispositifs exploitant le moment magnétique de charges électriques. De l'information peut par exemple être stockée dans un support ferromagnétique, en modifiant l'agencement des domaines magnétiques le composant, à l'aide d'un faisceau LASER et d'une source d'aimantation (US 6,377,414B1).

Un nouveau type de résistance variable, nommée valve de spin, a également pu être réalisé à partir d'une structure multicouche comprenant une première couche ferromagnétique, de coercivité supérieure à une seconde couche ferromagnétique. Les couches ferromagnétiques sont séparées par une couche non magnétique d'une épaisseur suffisamment fine pour permettre un couplage antiferromagnétique entre la première et la seconde couche. Les champs magnétiques sont préférentiellement parallèles et de sens opposé entre la première et la seconde couche. L'application d'un champ magnétique au niveau de la seconde couche permet d'inverser le sens de polarisation du champ magnétique au niveau de ladite couche, sans modifier celui de la première couche. De cette façon, les champs magnétiques sont orientés selon un même sens au niveau des faces en vis-à-vis des deux couches ferromagnétiques. Or, la conductivité d'un dispositif ferromagnétique croît lorsque décroît le nombre de domaines magnétiques qu'il comporte. L'application d'un champ magnétique au niveau de la seconde couche de la valve de spin permet d'effacer la paroi magnétique existant entre les couches ferromagnétiques, et de ce fait, de diminuer la résistivité électrique de ce dispositif résistif.

Ce type de dispositif résistif est complexe et coûteux à réaliser en raison des natures différentes et de l'agencement particulier des couches qui le composent.

D'autre part, l'inversion du sens du champ magnétique dans la seconde couche nécessite l'application d'un champ magnétique extérieur d'intensité suffisante, plus précisément, d'intensité supérieure au champ coercitif de ladite couche. Un certain temps de latence est alors nécessaire pour que le champ extérieur atteigne cette valeur critique. De plus, le dispositif multicouche peut avoir des valeurs de résistance électrique limitées par sa structure même. En effet, ces valeurs sont proportionnelles au nombre de couches ferromagnétiques de polarité opposé composant la valve de spin. Le document US 2002/0029462 A1 divulgue un procédé de modification de la valeur d'une résistance électrique. L'invention vise à proposer un procédé de modification de la résistance électrique d'un dispositif ferromagnétique qui soit plus rapide, selon un procédé d'inscription optique local sur un matériau ferromagnétique composant ledit dispositif, et permettant de modifier à volonté la valeur de la résistance électrique du dispositif dans des plages de valeurs offrant plus de choix.

## EXPOSÉ DE L'INVENTION

Pour permettre de résoudre au moins l'un des problèmes techniques précédents, l'invention propose un procédé de modification de la valeur d'une résistance électrique, comportant un matériau ferromagnétique possédant une première direction d'aimantation, comprenant les étapes suivantes :

> a) éclairement par un premier faisceau LASER, émis par une première source LASER, d'une première zone du matériau ferromagnétique, la résistance électrique de la première zone correspondant à une première valeur, le premier faisceau LASER éclairant la première zone, de sorte que cette zone soit chauffée à une température égale ou supérieure à la température de Curie du matériau ferromagnétique ;
> b) application dans la première zone, par l'intermédiaire de moyens d'aimantation, d'un champ magnétique de direction opposée à la première direction d'aimantation du matériau ferromagnétique, l'intensité du champ magnétique étant inférieure au champ coercitif du matériau ferromagnétique à température ambiante ;
> c) diminution de l'énergie apportée par le premier faisceau LASER à la première zone afin de permettre le refroidissement de la première zone en dessous de la température de Curie du matériau ferromagnétique pour former un premier domaine magnétique contrôlé, la valeur de la résistance électrique du premier domaine magnétique contrôlé correspondant à une deuxième valeur différente de la première valeur.

L'application du champ magnétique dans la première zone est maintenue lors de l'étape c) de refroidissement de la première zone en dessous de la température de Curie du matériau ferromagnétique. Le champ magnétique peut être annulé dans la première zone lorsque la première zone a une température inférieure à la température de Curie du matériau ferromagnétique.

La deuxième valeur de la résistance électrique du matériau ferromagnétique, en présence de ce domaine magnétique contrôlé, est alors différente de la première valeur obtenue sans le domaine magnétique contrôlé. Un procédé selon l'invention permet avantageusement de modifier la valeur de la résistance électrique d'un dispositif résistif de structure simple, constitué par exemple d'une seule couche de matériau ferromagnétique.

La température de Curie d'un matériau ferromagnétique correspond à la température à laquelle le matériau perd son aimantation spontanée. Le champ coercitif d'un matériau ferromagnétique désigne l'intensité du champ magnétique qu'il est nécessaire d'appliquer audit matériau pour l'aimanter.

La résistance électrique peut être connectée à une source de tension électrique, afin d'être traversée par un courant électrique. Le premier domaine magnétique contrôlé peut alors séparer la résistance électrique en deux parties.

Avantageusement, le premier domaine magnétique contrôlé peut être de forme linéaire et/ou perpendiculaire à la direction de propagation du courant électrique traversant la résistance électrique, de manière à modifier plus efficacement la conduction du courant électrique se propageant à travers la résistance.

Après l'étape c), un champ magnétique de même direction que la première direction d'aimantation du matériau ferromagnétique, et d'intensité supérieure au champ coercitif dudit matériau à température ambiante, peut être appliqué pour effacer le premier domaine magnétique contrôlé et ainsi modifier de nouveau la valeur de la résistance électrique.

Suite à l'effacement du premier domaine magnétique contrôlé, les étapes mentionnées ci-dessus peuvent être reproduites afin de former un deuxième domaine magnétique contrôlé dans le matériau ferromagnétique. La valeur de la résistance électrique du deuxième domaine magnétique contrôlé peut correspondre à une troisième valeur différente de la deuxième valeur associée au premier domaine magnétique contrôlé.

Selon une variante, l'étape b) peut être réalisée avant l'étape a). Lors de l'étape b) le premier faisceau LASER peut être déplacé par des moyens de déplacement afin de chauffer une zone du matériau ferromagnétique de dimensions plus larges que la première zone. En d'autres termes, un domaine magnétique contrôlé peut être constitué d'au moins deux domaines magnétiques contrôlés se chevauchant et réalisés selon l'un des procédés ci-dessus.

Après l'étape c), la position entre le premier faisceau LASER et le matériau ferromagnétique peut être modifiée de sorte que le premier faisceau LASER éclaire une deuxième zone, distincte de la première zone. L'un des procédés mentionnés ci-dessus peut alors être reproduit pour la deuxième zone afin de réaliser un deuxième domaine magnétique contrôlé distinct du premier. Eventuellement, le sens et/ou la direction du champ magnétique formé par les moyens d'aimantation ci-dessus peut être modifié(e) pour au moins deux zones choisies distinctes. Il est ainsi possible de former des domaines magnétiques contrôlés distincts délimitant des zones d'aimantation de sens et/ou de direction différente. Les valeurs des résistances électriques de domaines magnétiques contrôlés ainsi formés, peuvent être identiques ou bien différentes.

La valeur de la résistance électrique d'un domaine magnétique dépend de ses dimensions. De ce fait, l'invention permet de modifier à volonté la valeur de la résistance électrique du matériau ferromagnétique en permettant de former et/ou d'effacer des domaines magnétiques de forme et de dimensions différentes. Ainsi, les valeurs que peut prendre la résistance électrique ne sont pas limitées par sa structure, comme c'est par exemple le cas avec une valve de spin. L'invention permet donc de modifier la valeur de la résistance du matériau ferromagnétique dans des plages comprenant plus de valeurs.

L'étape de désaimantation mentionnée ci-dessus peut être réalisée localement ou globalement dans le matériau ferromagnétique, afin de désaimanter un ou plusieurs domaines magnétiques contrôlés ou non. Cette étape de désaimantation peut être reproduite de manière à modifier à volonté la valeur de la résistance électrique.

L'un des procédés ci-dessus peut également comprendre les étapes suivantes :

1) éclairement du matériau ferromagnétique composant la résistance électrique par un second faisceau LASER, la longueur d'onde d'émission du second faisceau LASER étant différente de celle du premier faisceau LASER ;
2) mesure de la rotation de l'axe de polarisation du second faisceau LASER réfléchi ou transmis par la résistance électrique, afin de visualiser les domaines magnétiques dans le matériau ferromagnétique composant la résistance électrique.

Le second faisceau LASER peut être de type continu ou impulsionnel. Il est de préférence de type impulsionnel car la quantité d'énergie nécessaire pour visualiser les domaines magnétiques est alors moins importante. Le second faisceau LASER peut être focalisé au même endroit que le premier faisceau LASER.

La présente demande concerne également un dispositif de contrôle apte à la mise en oeuvre d'un procédé décrit ci-dessus. Un dispositif de contrôle peut comprendre :

- des moyens de maintien aptes à maintenir une résistance électrique comportant un matériau ferromagnétique ;
- une première source LASER apte à émettre un premier faisceau LASER à une première longueur d'onde et orienté vers les moyens de maintien ;

- des moyens d'aimantation aptes à établir un champ magnétique de direction, de sens et d'intensité contrôlés à proximité (ou contre ou entre ou en surface) des moyens de maintien ;
- un dispositif de commande contrôlant le fonctionnement de la source LASER et des moyens d'aimantation.

Un dispositif de contrôle peut comporter un dispositif optique permettant de focaliser le premier faisceau LASER, à la limite de sa diffraction à proximité (ou contre ou entre ou en surface) des moyens de maintien. Les moyens d'aimantation peuvent former un champ magnétique compris entre -0.3 et 0.3 Tesla, valeurs qui dépendent du matériau ferromagnétique utilisé. Ces valeurs seront de préférence inférieures, par exemple comprises entre -0.05 et + 0.05 Tesla. Eventuellement, une structure diffractive peut être intercalée entre la source LASER et les moyens de maintien de manière à éclairer certaines zones à proximité (ou contre ou entre ou en surface) des moyens de maintien. Le dispositif de contrôle peut comprendre des moyens de déplacement pour déplacer la zone éclairée par le premier faisceau LASER à proximité (ou contre ou entre ou en surface) des moyens de maintien.

Le dispositif de contrôle peut aussi comprendre un dispositif d'imagerie comportant :

- un moyen apte à émettre un second faisceau LASER orienté vers les moyens de maintien, à une longueur d'onde différente du premier faisceau LASER ;
- des moyens de mesure aptes à mesurer la rotation de l'axe de polarisation du second faisceau LASER réfléchi ou transmis par une résistance électrique comportant un matériau ferromagnétique, maintenue par les moyens de maintien, afin de visualiser les domaines magnétiques dans ou sur le matériau ferromagnétique.

Le dispositif d'imagerie peut comprendre un modulateur permettant de moduler la fréquence du premier faisceau LASER. Le modulateur peut être synchronisé avec les moyens de mesure afin de détecter uniquement l'effet du premier faisceau LASER sur le second faisceau LASER. Le premier ou/et le second faisceau LASER peuvent être de type impulsionnel. Le premier et/ou le second faisceau LASER peuvent avoir une résolution temporelle comprise entre $10^{-13}$ et $10^{-15}$ secondes. Les moyens de mesure peuvent comprendre un analyseur, un polariseur et un photo-détecteur ou bien une caméra CCD.

## BRÈVE DESCRIPTION DES DESSINS

D'autres détails et caractéristiques de l'invention apparaîtront de la description qui va suivre, faite en regard des figures annexées suivantes.

Les parties identiques, similaires ou équivalentes des différentes figures portent les mêmes références de façon à faciliter le passage d'une figure à une autre. Les différentes parties représentées sur les figures ne le sont pas nécessairement selon une échelle uniforme, pour rendre les figures plus lisibles. Le repère (0; i; j; k) indiqué sur les figures est constitué de directions 0i, 0j, 0k orthogonales.

La figure 1 représente une vue de face d'un exemple de dispositif de contrôle selon l'invention.

Les figures 2A et 2B représentent une vue de face de variantes du dispositif de contrôle représenté en figure 1.

La figure 3 représente une vue de profil d'une variante du dispositif de contrôle représenté en figure 1, comprenant un matériau ferromagnétique.

La figure 4 représente une vue en perspective d'un procédé selon l'invention, de modification de la résistance d'un matériau ferromagnétique.

La figure 5 représente une première étape d'un procédé, selon l'invention, de modification de la résistance d'un matériau ferromagnétique.

La figure 6 représente une deuxième étape d'un procédé selon l'invention, de modification de la résistance d'un matériau ferromagnétique.

La figure 7 représente une troisième étape d'un procédé selon l'invention, de modification de la résistance d'un matériau ferromagnétique.

La figure 8 représente une quatrième étape d'un procédé selon l'invention, de modification de la résistance d'un matériau ferromagnétique.

La figure 9 représente une variante d'un procédé de modification de la résistance d'un matériau ferromagnétique.

La figure 10 représente un matériau ferromagnétique comportant plusieurs domaines magnétiques contrôlés réalisés selon un procédé de l'invention.

La figure 11 représente une vue de face d'un dispositif de contrôle représenté en figure 1 comprenant un dispositif d'imagerie.

Les figures 12A à 12C représentent des vues en perspective d'exemples de modulateur.

La figure 13 représente une mesure d'hystérèse magnétique d'un matériau ferromagnétique.

La figure 14 représente deux images (A et B) de contrastes magnétiques mesurés à la surface d'un matériau ferromagnétique, comprenant 4 domaines magnétiques contrôlés, réalisés selon un procédé de l'invention.

La figure 15 représente cinq images (A-E) de contrastes magnétiques mesurés à la surface d'un matériau ferromagnétique comprenant 4 domaines magnétiques contrôlés, réalisés selon un procédé de l'invention.

La figure 16 représente des mesures de la valeur d'une résistance électrique, en fonction du nombre de domaines magnétiques contrôlés réalisés selon un procédé de l'invention.

## EXPOSÉ DÉTAILLÉ DE MODES DE RÉALISATION PARTICULIERS

La présente demande vise un procédé de modification de la valeur d'une résistance électrique, comportant un matériau ferromagnétique possédant une première direction d'aimantation. Afin de faciliter la compréhension de l'invention par le lecteur, un exemple de réalisation d'un dispositif permettant la mise en oeuvre du procédé, précède un exemple de réalisation dudit procédé. Chaque exemple est complété par des variantes qui peuvent être combinées ensemble pour réaliser d'autres variantes non explicitement mentionnées.

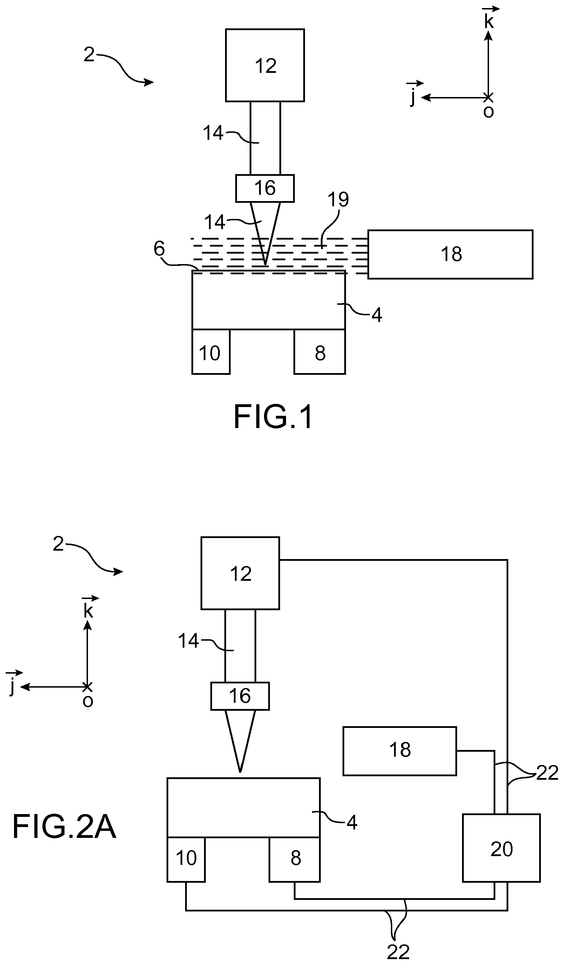

Un dispositif permettant la mise en oeuvre d'un procédé selon l'invention, nommé par la suite dispositif de contrôle 2, comporte un support 4 apte à maintenir sur une première face du support 6 une résistance électrique 30 comportant un matériau ferromagnétique 31. Un exemple de résistance électrique 30 est décrit ci-dessous. De préférence, la première face du support est choisie de manière à permettre un maintien optimum de la résistance électrique sur le support 4, elle peut être de surface plane (figure 1). Des moyens de déplacement sont associés au support 4 de manière à permettre le déplacement de la première face du support dans un plan (0; i; j).

Les moyens de déplacement comportent deux moteurs indépendants 8 et 10. Le premier moteur 8 permet le déplacement de la face du support selon une première direction (0 ; i), le second moteur 10 selon une seconde direction (0; j) perpendiculaire à la première direction. Dans le cadre du présent exemple, le support 4 et les moyens de déplacement 8 et 10 forment une platine piézoélectrique de haute résolution spatiale, commercialisée sous la référence « Physics Instrument P-733.2CD ».

Le dispositif de contrôle 2 comporte une source LASER 12 de type impulsionnelle, émettant un faisceau LASER 14 à une longueur d'onde de 400nm avec une durée d'impulsion d'une centaine de femtosecondes (1 femtoseconde = $10^{-15}$ seconde). La source LASER est selon cet exemple une source Titane Saphir amplifiée et doublée en fréquence. Le faisceau LASER 14 est orienté et focalisé par un dispositif optique 16 en direction de la première face du support 6, de sorte que le faisceau LASER soit à la limite de sa diffraction sur ladite première face. Le dispositif optique est composé d'un objectif de microscope d'ouverture numérique (NA) égale à 0,6.

Le dispositif de contrôle comporte des moyens d'aimantation 18 permettant d'établir à volonté un champ magnétique de sens, de direction et d'intensité souhaités sur la première face du support 6. Plus précisément, la direction du champ magnétique créé par les moyens d'aimantation est perpendiculaire à la première direction définie ci-dessus et son sens peut être inversé à volonté. Les moyens d'aimantation 18 permettent la formation d'un champ magnétique statique 19 de l'ordre d'un dixième de Tesla sur la première face du support. Les moyens d'aimantation peuvent par exemple être composés par un aimant permanent en NdFeB de forme cylindrique (diamètre : 3 mm, longueur : 5 mm) ou par un électro-aimant constitué d'un aimant permanent enroulé de spires en cuivre alimentées par un courant jusqu'à 6 A.

Selon une première variante du dispositif de contrôle 2, les moyens de déplacement 8 et 10, la source LASER 12 et les moyens d'aimantation 18, ainsi que la source de tension 26 sont connectés à un même dispositif de commande 20 permettant de contrôler le fonctionnement d'au moins un des dispositifs précédents (figure 2A). Le terme « connecté » désigne tout moyen permettant un échange d'information entre le dispositif de commande et l'un des dispositifs ci-dessus. Par exemple, la source LASER peut être connectée au dispositif de commande par l'intermédiaire d'un ou plusieurs fils conducteurs 22. Le dispositif de commande peut comporter au moins l'un des moyens suivants :

- des moyens de mémorisation ou de stockage d'information, par exemple un disque dur;
- des moyens de calcul, par exemple un processeur ;
- des moyens d'affichage, par exemple un écran ;
- des moyens permettant d'interagir avec le dispositif de commande, par exemple un clavier numérique.

En d'autres termes, le dispositif de commande 20 peut être un ordinateur comprenant un logiciel permettant de contrôler le fonctionnement des moyens ci-dessus.

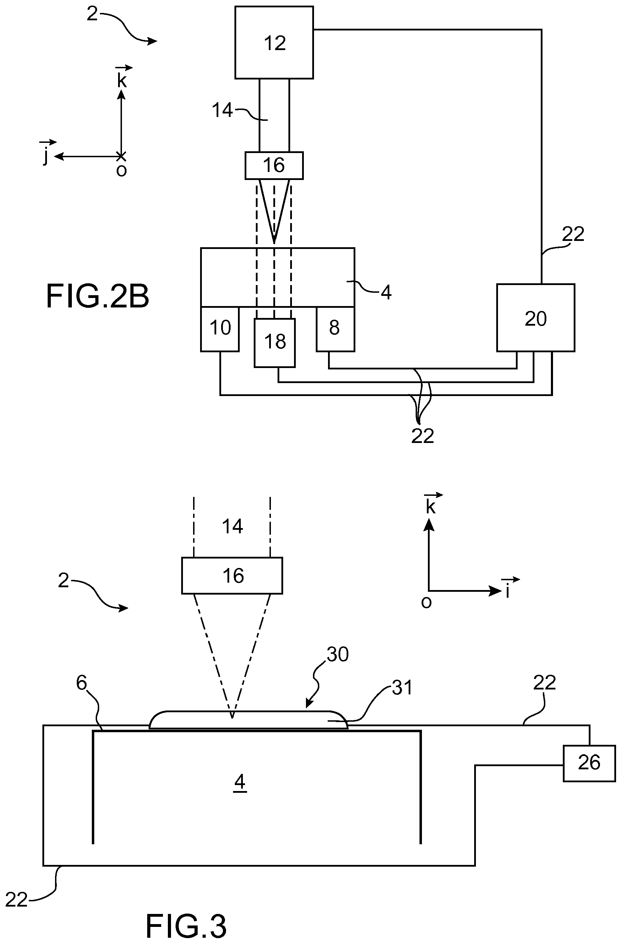

Selon une seconde variante du dispositif de contrôle, les moyens d'aimantation 18 sont positionnés de manière à pouvoir produire un champ magnétique 19 orienté pour former un angle alpha par rapport à l'axe (0; k), dont la valeur peut être comprise entre 0 et 45° (figure 2B). La valeur de l'angle alpha peut être choisie en fonction de l'anisotropie cristalline du matériau ferromagnétique composant la résistance électrique positionnée sur la première face du support 6. Par exemple, lorsque l'anisotropie cristalline est perpendiculaire au matériau ferromagnétique, c'est-à-dire dans la direction (0; k), on prendra alpha=0°.

Selon une troisième variante, le support 4 est fixe et les moyens de déplacements sont associés à la source LASER 12 de sorte que le support 4 soit immobile et le faisceau LASER 14 mobile par rapport à la première face du support 6.

Eventuellement, le support et la source LASER peuvent chacun comporter des moyens de déplacements, contrôlés par le dispositif de commande 20, de manière à être mobiles.

Selon une quatrième variante, le support 4 et la source LASER 12 peuvent ne pas comporter de moyens de déplacement. Un masque 40, comportant un motif géométrique, non représenté sur les figures, peut alors être interposé entre la source LASER et le dispositif optique 16 pour que le motif géométrique soit imagé sur la première face du support 6. Cette variante permet avantageusement d'inscrire directement et rapidement des domaines magnétiques de formes et de dimensions variées sur une résistance électrique disposée sur la première face du support 6, selon l'un des procédés décrits ci-dessous.

Selon une cinquième variante, lorsque le support 4 et la source LASER 12 ne comportent pas de moyens de déplacement, le faisceau LASER peut être modifié en faisant interférer deux impulsions lumineuses issues de la source LASER. Par exemple, la superposition de ces deux impulsions lumineuses peut faire varier l'intensité du faisceau LASER dans un plan normal à sa direction de propagation, pour former un motif de type anneaux de Newton. L'avantage de cette variante est qu'elle permet de s'affranchir du masque proposé selon la quatrième variante.

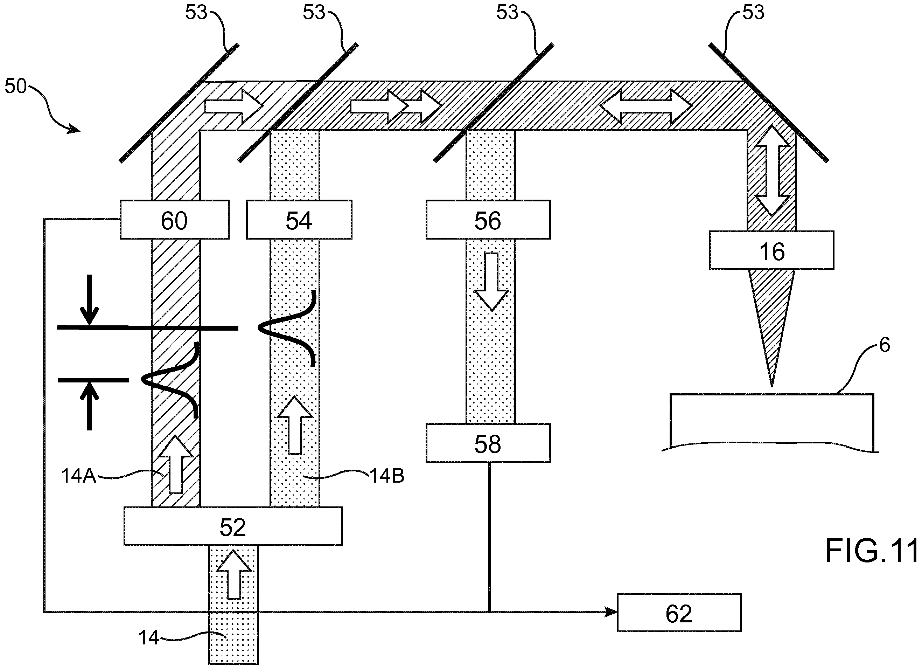

Selon une sixième variante, le dispositif de contrôle peut comporter un dispositif d'imagerie 50 comprenant les éléments suivants (figure 11). Un moyen de séparation 52, constitué d'une lame semi-réfléchissante, d'un cristal non linéaire comme du BBO (béta-baryum-borate) et d'un moyen pour retarder les impulsions LASER, permet de séparer le faisceau LASER 14 en un premier faisceau LASER 14A et un second faisceau LASER 14B de longueurs d'onde différentes. Le premier faisceau LASER peut par exemple avoir une longueur d'onde centrale de 400 nm et permettre la réalisation de domaines magnétiques contrôlés, le second faisceau LASER peut avoir une longueur d'onde de 800 nm et permettre la visualisation desdits domaines (voir ci-dessous). Dans le moyen de séparation 52, un moyen pour retarder les impulsions LASER des deux faisceaux 14A et 14B, peut permettre de modifier le contraste des images des domaines magnétiques inscrits sur le matériau ferromagnétique. Les deux faisceaux LASER sont orientés par des moyens de déviation 53 (par exemple des lames réfléchissantes ou semi-réfléchissantes), et focalisés par l'objectif de microscope 16 en un même endroit sur la première face du support 6. Un polariseur 54 interposé entre le moyen de séparation 52 et la première face du support permet de déterminer le sens de polarisation du second faisceau LASER 14B.

Un analyseur 56 positionné devant un photo-détecteur 58 permet de mesurer la rotation de l'axe de polarisation d'au moins une partie du second faisceau LASER 14B qui est réfléchie ou transmise par un objet (non représenté) placé sur la première face du support 6 (figure 11). Le premier et second faisceau LASER sont de type continu ou impulsionnel.

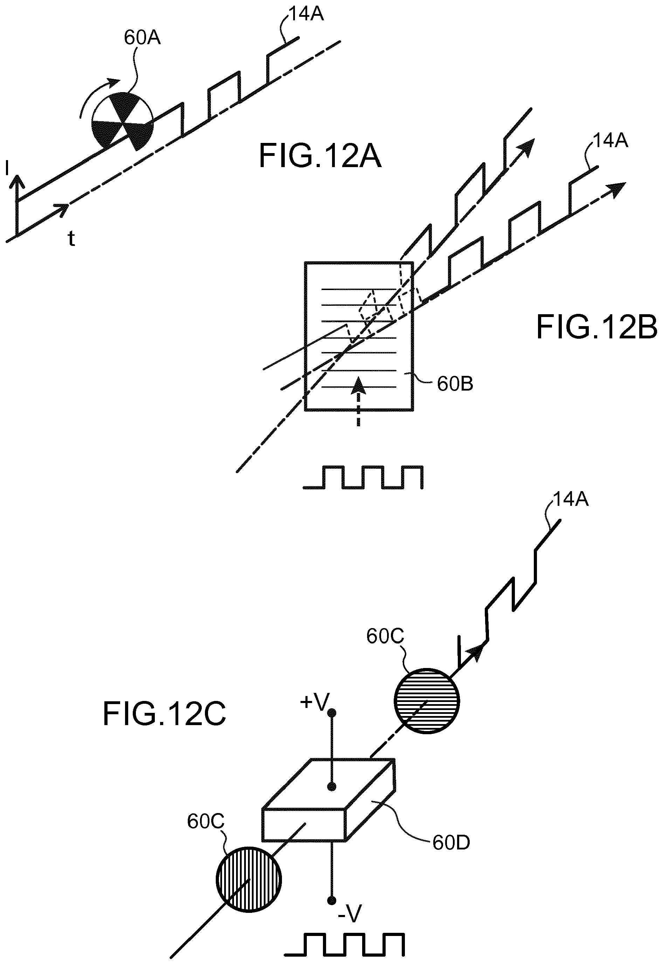

Eventuellement, un modulateur 60 peut être positionné entre le moyen de séparation 52 et l'objectif de microscope 16 de manière à moduler la fréquence du premier faisceau LASER 14A. Le modulateur 60 est synchronisé avec le photo-détecteur 58 par l'intermédiaire d'un dispositif de synchronisation 62, afin de détecter uniquement le second faisceau LASER 14B. Le modulateur 60 peut être de type mécanique et comprendre une hélice rotative 60A coupant le second faisceau LASER 14A (figure 12A). Le modulateur peut être de type acousto-optique 60B, comprenant un cristal dont la variation d'indice de réfraction, due aux ondes acoustiques, dévie le faisceau LASER produisant ainsi une modulation de l'intensité (figure 12B). Le modulateur peut être de type électro-optique et comprendre une cellule de Pockels 60D placée entre deux polariseurs 60C (figure 12C).

Selon une variante, le second faisceau LASER 14B peut ne pas être focalisé par l'objectif de microscope 16, et éclairer une zone plus large de la première face du support 6. Le photo-détecteur peut alors être substitué par une caméra CCD permettant avantageusement de reconstruire l'image de la zone éclairée par le second faisceau LASER 14B.

Les dispositifs d'imagerie décrits ci-dessus permettent avantageusement de mesurer spatialement et temporellement la variation d'aimantation d'un matériau ferromagnétique placé sur la première face du support 6.

Selon une septième variante, l'un des dispositifs de contrôle ci-dessus peut comporter des moyens de maintien permettant de maintenir une résistance électrique 30 sur ou au contact de la première face du support 6. Les moyens de maintien peuvent par exemple être composés de deux pinces (non représentées sur les figures).

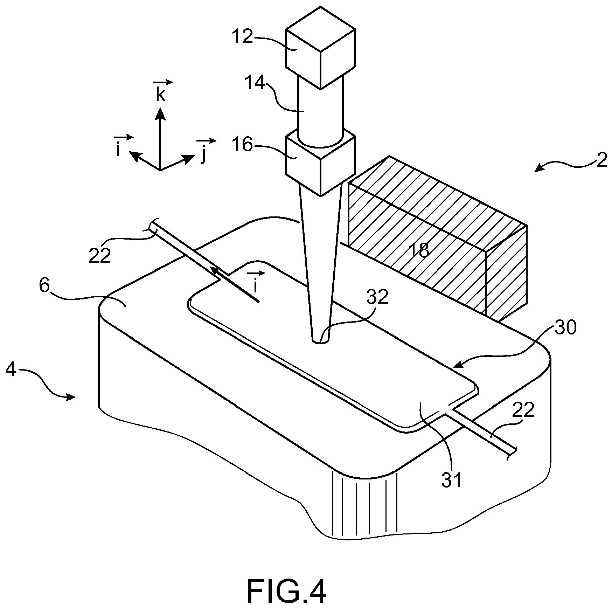

A présent est décrit un exemple de réalisation d'un procédé de modification de la valeur d'une résistance électrique, comportant un matériau ferromagnétique possédant une première direction d'aimantation. Cet exemple est mis en oeuvre à l'aide d'un dispositif de contrôle 2 décrit ci-dessus (figure 4).

Une première étape du procédé consiste à placer une résistance électrique 30, comprenant un matériau ferromagnétique 31, sur ou au contact de la première face du support 6 du dispositif de contrôle 2. Une résistance électrique 30 peut par exemple être un ruban de Cobalt-Platine de $50\,\mu m$ de longueur selon la direction (0; i), de $10\,\mu m$ de largeur selon la direction (0; j) et de $0,01\,\mu m$ d'épaisseur selon la direction (0; k) (figure 4). De préférence, la résistance électrique est connectée électriquement à une source de tension électrique 26 par l'intermédiaire de pistes conductrices 22, de sorte qu'un courant électrique puisse traverser la résistance électrique selon la première direction (0; i) (figure 4).

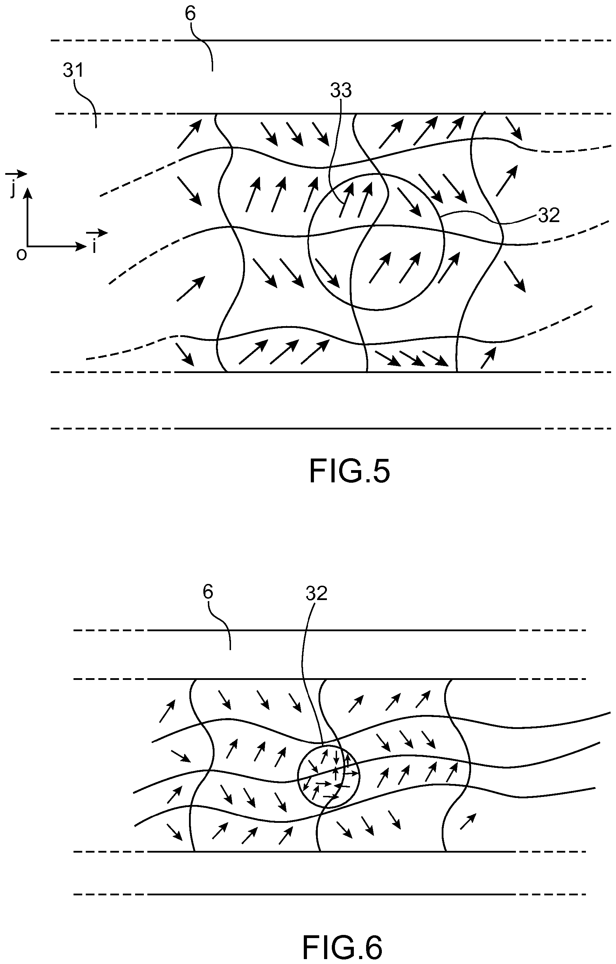

Selon une deuxième étape du procédé, le support 4 et la source LASER 12 sont positionnées de sorte que le faisceau LASER 14 puisse éclairer une zone 32 choisie du matériau ferromagnétique composant la résistance électrique 30 (figure 5).

Selon une troisième étape, la source LASER 12 est mise en fonctionnement et le faisceau LASER 14 est focalisé sur la zone 32 choisie, de manière à exciter les charges électriques liées à la structure du matériau au-dessus de leur niveau d'énergie de Fermi (1.5 eV ou bien 3 eV) (figure 6). Durant cette étape, l'interaction entre les photons du faisceau LASER 14 et les spins 33 desdites charges électriques, via un phénomène de couplage nommé spin-orbite, favorise un transfert de moment angulaire entre les moments angulaire orbital Lz et de spin Sz (C. Boeglin, E. Beaurepaire, V. Halté, V. Lopez-Flores, C. Stamm, N. Pontius, H. A. Duerr, and J.-Y. Bigot, Nature, Vol. 465, 458-462, 27 mai 2010). Ce phénomène contribue à une diminution de l'ordre ferromagnétique dans la zone éclairée par le faisceau LASER (figure 6). La densité d'excitation du faisceau LASER est choisie de manière à désaimanter le matériau ferromagnétique en réduisant son « ordre ferromagnétique ». En d'autres termes, le faisceau LASER permet de désaimanter localement la zone éclairée 32 du matériau ferromagnétique 31. La densité d'excitation du faisceau LASER permet d'atteindre une température voisine ou supérieure à la température de Curie du matériau ferromagnétique dans la zone choisie. Autrement dit, une zone du matériau est désaimantée lorsque les spins 33 associés à cette zone sont chauds, c'est-à-dire, à une température supérieure à la température de Curie du matériau (J.-Y. Bigot C. R. Acad. Sci. Paris, t. 2, Série IV 2, 1483-1504 (2001)). La source LASER permet avantageusement d'atteindre cette gamme de température en quelques centaines de femto-secondes.

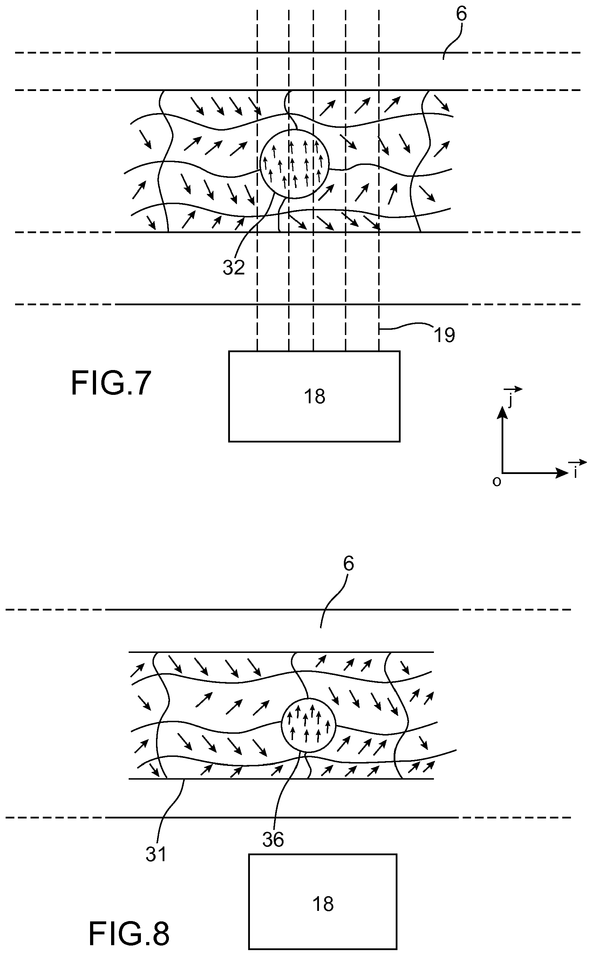

Selon une quatrième étape du procédé, lorsque la zone éclairée possède une aimantation faible, ou bien est désaimantée (typiquement l'aimantation M doit alors être telle que M<(Ms/10) où Ms est l'aimantation à saturation du matériau ferromagnétique), les moyens d'aimantation 18 appliquent un champ magnétique 19 de l'ordre de $\pm 0,05$ Tesla dans la zone éclairée 32, selon la seconde direction (0; j) définie ci-dessus (figure 7). Le champ magnétique 19 est d'intensité suffisante pour orienter tous les spins chauds de la zone 32 selon un même sens et une même direction, mais avantageusement d'intensité insuffisante pour modifier l'orientation des spins situés en dehors de la zone 32.

Selon une cinquième étape, le champ magnétique 19 étant maintenu dans la zone éclairée 32, l'énergie du faisceau LASER est diminuée dans ladite zone 32 de manière à permettre aux spins chauds de se refroidir via un phénomène de relaxation spin-phonon. C'est au cours de ce processus, qui dure quelques picosecondes, que l'aimantation amorce sa dynamique de renversement. Le champ magnétique 19 permet avantageusement de maintenir les moments magnétiques des spins chauds selon une direction et un sens souhaité lors de leur refroidissement, dans le cas présent selon la seconde direction (0; j). Lorsque la température des spins chauds passe en dessous de la température de Curie du matériau ferromagnétique 31, ceux-ci se figent selon la direction et le sens du champ magnétique 19 produit par les moyens d'aimantation 18.

Selon une sixième étape, le champ magnétique 19 est annulé dans la zone 32 lorsque les spins dans la zone 32 ont une température inférieure à la température de Curie (figure 8). On obtient alors dans la zone 32 un domaine magnétique dont les dimensions sont contrôlées, appelé domaine magnétique contrôlé 36.

Selon une première variante, le champ magnétique 19 peut être maintenu à une intensité constante avant et après la focalisation du faisceau LASER 14 sur le matériau ferromagnétique 31. L'intensité du champ magnétique 19 est de préférence choisie de manière à ne pas modifier les domaines magnétiques se situant dans des zones non éclairées par le faisceau LASER.

Selon une deuxième variante, la distance entre la source LASER 12 et le matériau ferromagnétique 31 et/ou le dispositif optique 16 peut être modifiée de manière à contrôler la position du point de focalisation du faisceau LASER dans ou sur le matériau ferromagnétique. En d'autres termes, il est possible de définir précisément les dimensions et la profondeur de la zone 32 et donc le domaine magnétique contrôlé 36 formé, en modifiant la position du point de focalisation du faisceau LASER dans ou sur le matériau ferromagnétique 31.

Selon une troisième variante, la source LASER et/ou la face du support 6 peut être déplacée par les moyens de déplacements 8 et 10 de manière à modifier la position de la zone 32 correspondant au spot du faisceau LASER sur le matériau ferromagnétique 31. De cette façon, il est avantageusement possible de réaliser un domaine magnétique contrôlé de dimensions supérieures à la zone 32 éclairée par le faisceau LASER 14 et/ou que cette zone soit de forme différente.

Les procédés de réalisation d'un domaine magnétique contrôlé 36 décrits ci-dessus, permettent avantageusement de contrôler les dimensions dudit domaine. Ces dimensions dépendent notamment du volume de matière du matériau ferromagnétique 31, amené par le faisceau LASER 14 à une température supérieure à la température de Curie dudit matériau. Les parois magnétiques présentes dans ce volume de matière sont alors effacées. Or, la résistance électrique d'un matériau ferromagnétique dépend du nombre de parois magnétiques traversées par un courant électrique. De ce fait, en effaçant des parois magnétiques dans un domaine magnétique contrôlé, on modifie la valeur de la résistance électrique du matériau ferromagnétique 31.

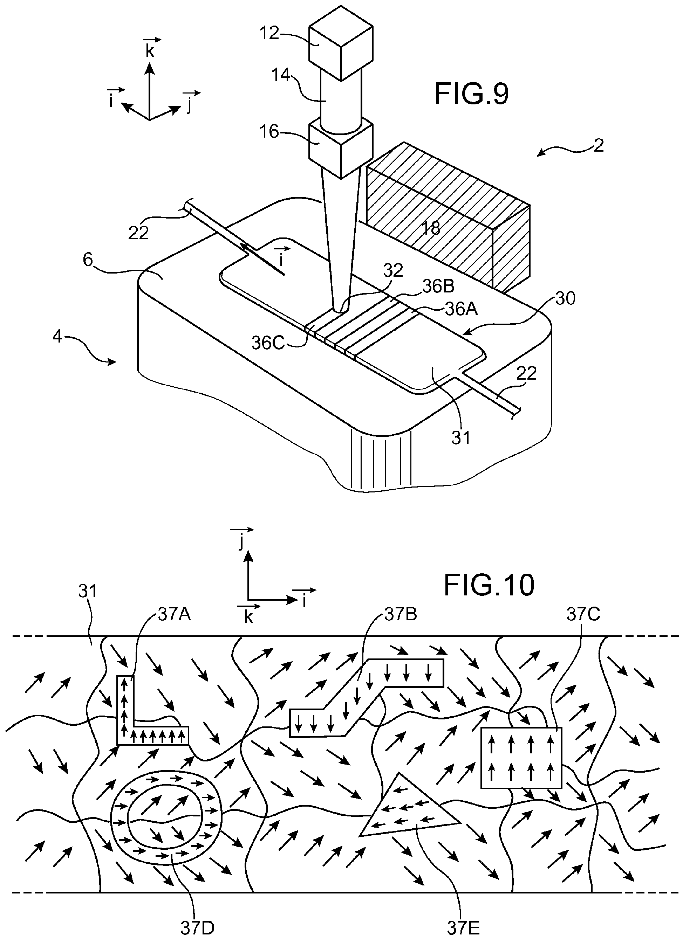

Selon une quatrième variante, le faisceau LASER peut ne pas éclairer le matériau ferromagnétique lorsque les moyens de déplacements sont actionnés, de manière à pouvoir réaliser plusieurs domaines magnétiques contrôlés 36 distincts dans un même matériau ferromagnétique. Par exemple, des domaines magnétiques contrôlés distincts 36A, 36B et 36C peuvent former des lignes parallèles et perpendiculaires au sens de propagation du courant i (figure 9). La distance entre les lignes et le sens d'aimantation de chaque ligne peuvent tous les deux être contrôlés par l'intermédiaire par exemple, des moyens de déplacement, du LASER et des moyens d'aimantation ci-dessus. En formant plusieurs domaines magnétiques contrôlés distincts, on peut avantageusement modifier la valeur de la résistance électrique.

Selon une cinquième variante, pour chaque domaine magnétique contrôlé 36 distinct, l'orientation du champ magnétique 19 peut être modifiée de manière à réaliser des domaines magnétiques contrôlés 37 différents en forme, en dimensions et en orientation magnétique (figure 10).

Avantageusement, l'invention comporte également une étape permettant d'effacer un ou plusieurs domaines magnétiques contrôlés. Pour cela, la valeur du champ magnétique 19 formé par les moyens d'aimantation 18 peut être augmentée au-delà de la valeur du champ coercitif à température ambiante du matériau ferromagnétique composant la résistance électrique. Selon une variante, la focalisation du faisceau LASER 14 peut permettre d'effacer localement un ou plusieurs domaines magnétiques contrôlés en les chauffant à une température supérieure à la température de Curie du matériau ferromagnétique. Un ou plusieurs nouveaux domaines magnétiques contrôlés peuvent alors être de nouveau formés sur et/ou dans la résistance électrique 31.

Selon un procédé de modification de la valeur d'une résistance électrique décrit ci-dessus, plusieurs domaines magnétiques contrôlés distincts 36A à 36D sont formés dans une résistance électrique 30 comprenant un matériau ferromagnétique 31 (figure 9).

L'invention concerne aussi un procédé d'imagerie, permettant d'imager au moins un domaine magnétique contrôlé réalisé selon l'un des procédés ci-dessus. Pour cela, un dispositif de contrôle comprenant un dispositif d'imagerie 50 décrit précédemment est employé (figure 11). Le procédé d'imagerie selon l'invention comporte une première étape consistant à focaliser le second faisceau LASER 14B, polarisé par le polariseur 54, au même endroit que le premier faisceau LASER 14A, sur la résistance électrique 30 maintenue sur la première face du support 6. Une seconde étape consiste à mesurer la rotation de l'axe de polarisation du second faisceau LASER 14B qui est réfléchi ou transmis par la résistance électrique 30, à l'aide du polariseur 54, de l'analyseur 56 et du photo-détecteur 58 (A. Laraoui, M. Albrecht, and J. Y. Bigot, Optics Letters, Vol. 32, N°8, 936-938, 15 avril 2007). Le premier et le second faisceau LASER peuvent être de type continu ou impulsionnel. Dans les deux cas, le signal magnéto-optique mesuré par le photo-détecteur 58 traduit la variation d'aimantation du matériau ferromagnétique 31 et permet ainsi d'obtenir l'image des domaines magnétiques contrôlés. Dans le cas où les deux faisceaux sont de type continu, le mécanisme physique de variation d'aimantation provient d'un échauffement du matériau ferromagnétique selon la courbe de Curie-Weiss. Dans le cas où les deux faisceaux sont de type impulsionnel, le signal magnéto-optique mesuré correspond à la dynamique des spins à laquelle on peut faire correspondre une température de spins dépendant du temps et qui n'est pas égale à celle du matériau ferromagnétique non éclairé. Le contraste de l'image magnétique de la résistance électrique dépend du retard entre les deux faisceaux LASER lorsqu'ils sont de type impulsionnel. La rotation de l'axe de polarisation du faisceau LASER 14B étant dépendante du retard entre les faisceaux LASER 14A et 14B (E. Beaurepaire, J.-C. Merle, A. Daunois, and J.-Y. Bigot, Phys. Rev. Lett, N°76, 4250-4253, 27 mai 1996), il en résulte un changement du contraste d'image. De plus, comme le processus de désaimantation, observé via la valeur de la rotation de l'axe de polarisation du faisceau LASER 14B, dépend de la densité d'énergie instantanée (énergie par unité de surface et de temps) du faisceau LASER 14A (et non de sa puissance moyenne), l'énergie apportée par le premier faisceau dans le matériau ferromagnétique 31 est beaucoup plus faible par rapport à l'utilisation de faisceaux LASER de type continu, puisque la durée des impulsions est très brève. De ce fait, l'énergie nécessaire pour réaliser et identifier des domaines magnétiques contrôlés dans la résistance électrique 30 est plus faible lors de l'utilisation de faisceaux LASER de type impulsionnel.

Eventuellement, l'image d'un ou de plusieurs domaines magnétiques contrôlés peut être obtenue en déplaçant le premier et le second faisceaux LASER par rapport à la résistance électrique 30 par les moyens de déplacement (8, 10) (figures 2A et 2B). Le photo-détecteur 58 peut ainsi reconstruire point par point une image du ou des domaines magnétiques contrôlés 36 présents dans la résistance électrique 30. Une variante peut consister à ne pas focaliser le second faisceau LASER 14B pour éclairer une plus grande zone de la résistance électrique. La résistance électrique est alors imagée à l'aide d'une caméra CCD (substituée au photo-détecteur 58). La caméra CCD permet une reconstruction globale d'une image du ou des domaines magnétiques contrôlés appartenant à la résistance électrique 30.

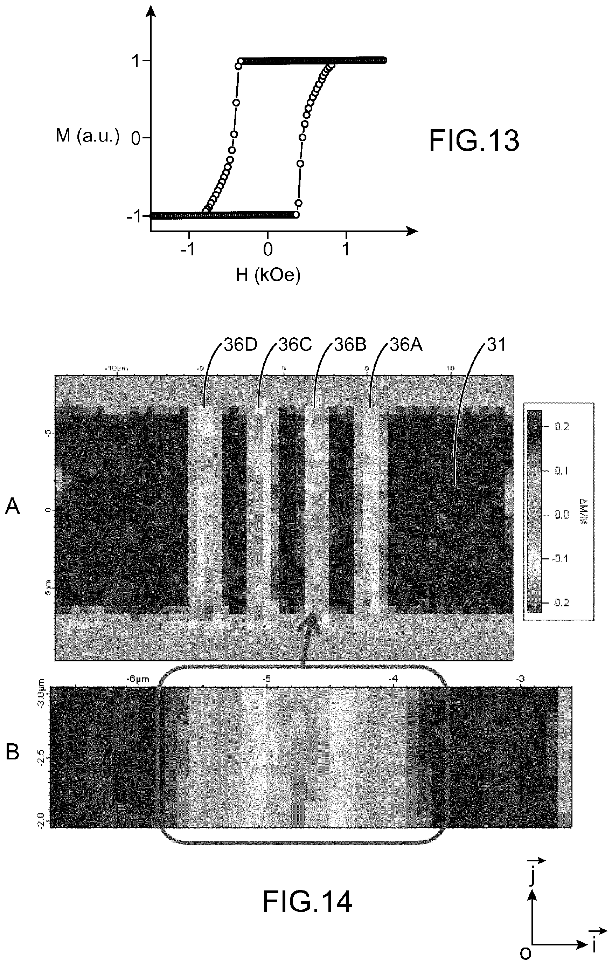

A présent plusieurs mesures de caractérisation d'une résistance électrique 30, comprenant un matériau ferromagnétique 31, sont présentées ci-après. La figure 13 représente une mesure d'hystérèse magnétique du matériau ferromagnétique 30 avec un champ coercitif de $550 \times 10^{-4}$ Tesla. Après la réalisation de domaines magnétiques contrôlés 36A à 36D dans une résistance électrique 30, selon l'un des procédés précédemment décrits (figure 9), une première série de mesures est réalisée à l'aide d'un dispositif d'imagerie 50 décrit ci-dessus (figure 11). Plus précisément, le second faisceau LASER 14B est de type impulsionnel avec une résolution spatiale de 333 nm et une résolution temporelle de 150 fs. Les mesures réalisées sont représentées sur la figure 14 par les images A et B. Avantageusement, ces images peuvent être réalisées dans des conditions de faible excitation LASER, de ce fait les domaines magnétiques contrôlés ne sont pas perturbés lors de leur visualisation ou de leur lecture et le contraste magnétique est très important, par exemple de l'ordre de 0,2. Les images A et B ont été obtenues pour un retard entre l'impulsion du faisceau LASER 14A et l'impulsion du faisceau LASER 14B de 500 fs. On observe sur l'image A la variation de l'intensité du champ magnétique qui est perpendiculaire à la première face du support 6. On distingue la présence des 4 domaines magnétiques contrôlés distincts 36A à 36D. L'image B est un grossissement de l'image A du domaine magnétique contrôlé 36B.

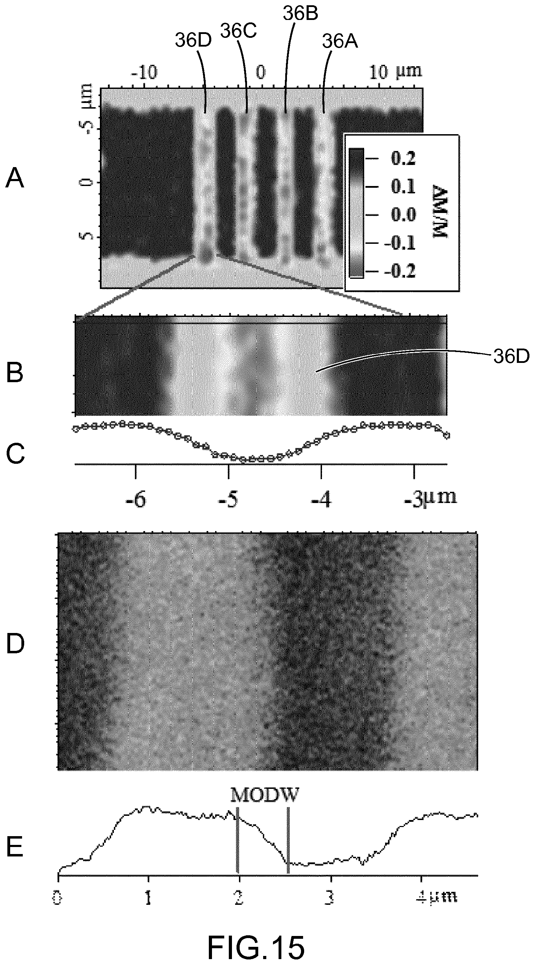

Une deuxième série de mesures est réalisée toujours sur les 4 domaines magnétiques contrôlés distincts, par une technique de microscopie par force magnétique (MFM) (Y. Martin and H. K. Wickramasinghe Appl. Phys. Lett. 50, 1455-1457, 19 mars 1987). Ces mesures MFM permettent d'obtenir une image (figure 15 D) des domaines magnétiques contrôlés avec une meilleure résolution que celles obtenues optiquement (figures 15A et 15B). Ces mesures MFM sont représentées en figure 15 D qui correspond à la variation de l'aimantation dans les domaines magnétiques 36D et 36C. Les Figures 15 C) et 15E) représentent les profils d'aimantation des domaines magnétiques contrôlés 36D obtenus optiquement (Figure 15 B) et obtenu par MFM (Figure 15 D).

A partir des mesures représentées en figures 14 et 15, les inventeurs ont mesuré la largeur des domaines magnétiques contrôlées, celle-ci est de l'ordre de 1,1 $\pm$ 0, 2 $\mu$m et l'espacement entre les domaines magnétiques en vis-à-vis est de l'ordre de 3 $\pm$ 0,2 $\mu$m. Plus précisément, la largeur d'une paroi magnétique délimitant deux domaines magnétiques est de l'ordre de 0,5 $\pm$ 0,2 $\mu$m. Il est remarquable de constater que les largeurs des parois magnétiques inscrites dans le matériau ferromagnétique 30 sont d'épaisseur nettement supérieure par rapport aux valeurs habituelles rencontrées pour ce type de matériau. En effet, les largeurs des parois magnétiques intrinsèques à ce type de matériaux (parois de Bloch ou de Néel) sont comprises habituellement entre 10 et 50 nm.

Des mesures de la résistance ohmique du matériau magnétique 30, en fonction du nombre de domaines magnétiques contrôlés distincts qu'il comporte, ont également été réalisées par les inventeurs. Les domaines magnétiques contrôlés sont réalisés sous forme de lignes représentées en figures 14 et 15 et selon le procédé d'utilisation du dispositif de contrôle représenté en figure 9. Deux domaines magnétiques contrôlés adjacents ont leur aimantation opposée. Ces domaines magnétiques contrôlés sont transverses par rapport à la direction du courant se propageant selon la première direction (0; i) dans le matériau ferromagnétique 31. Les mesures de résistance ohmique sont effectuées à proximité (ou contre ou entre ou en surface) des moyens de maintien 24 par un dispositif de mesure adapté (non représenté). Ces mesures sont effectuées avec une rampe de courant dont la séquence est : 0 → 100 $\mu$A → 0 A → -100 $\mu$A → 0A, avec un pas de 20 $\mu$A et une constante d'intégration de 200 ms par point de mesure.

Cette exploration de courant permet de vérifier qu'il n'y a pas d'artefact comme une hystérèse, due par exemple à la connectique du dispositif de mesure. Les inventeurs n'ont pas observé de tel comportement hystérétique et les résistances mesurées sont bien de type ohmique. Entre chaque mesure, les N domaines magnétiques contrôlés sont effacés selon un procédé ci-dessus et réinscrits avec un nouveau domaine magnétique contrôlé supplémentaire de sorte que le matériau ferromagnétique comporte N+1 domaines magnétiques contrôlés. Les mesures de résistance ohmique sont vérifiées entre N et N+1 et comparées à celles mesurées entre N-1 et N, de façon à éliminer toute erreur systématique de mesures.

Ces mesures sont également réalisées sur un matériau ferromagnétique se différenciant du matériau précédent par sa longueur, qui est deux fois plus grande, c'est-à-dire, de l'ordre de 80 $\mu$m.

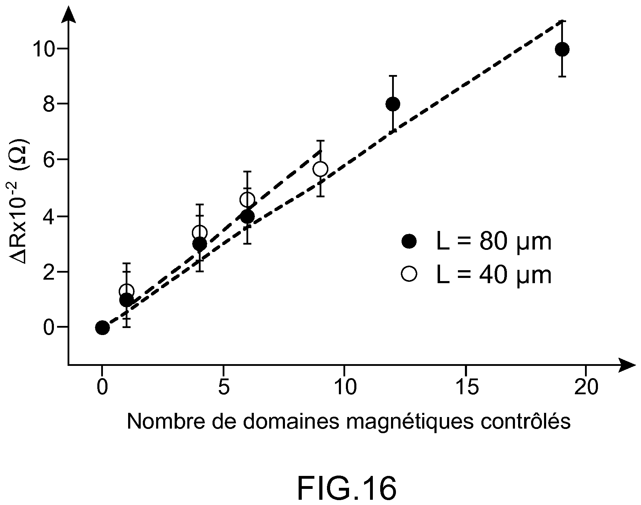

La figure 16 représente les mesures de variation de résistance ohmique $\Delta R = R_N - R_0$ où $R_N$ représente la résistance ohmique du matériau ferromagnétique comportant N domaines magnétiques distincts et $R_0$ la même mesure lorsque le matériau magnétique ne comporte aucun domaine magnétique contrôlé. Les mesures de résistance ohmique sont réalisées en absence de champ magnétique 19 produit par les moyens d'aimantation 18. La valeur de $R_0$ vaut respectivement 104 $\Omega$ et 257 $\Omega$ pour un matériau magnétique d'une longueur de 40 $\mu$m et 80 $\mu$m. La figure 16 montre cette variation de résistance ohmique du matériau ferromagnétique pour ces deux longueurs et en fonction du nombre de domaines magnétiques contrôlés réalisés selon un procédé décrit ci-dessus. Ces mesures démontrent de façon claire que la variation de résistance ohmique du matériau ferromagnétique augmente avec le nombre de domaines magnétiques contrôlés réalisés. L'invention permet donc de faire varier la résistance ohmique du matériau magnétique 31 de façon contrôlée et précise. Il est à noter que la valeur de la résistance ohmique peut varier de façon quasi continue, en adaptant le nombre et les dimensions des domaines magnétiques contrôlés en fonction de la valeur de la résistance souhaitée.

Pour les performances de conductivité électrique d'un matériau, la quantité importante est la variation relative de résistivité électrique définie par rapport à une paroi magnétique (P) unique :

$$\left( \Delta R / R \right)_{P,i} = \frac{\Delta R_P}{2 R_i} \frac{L_i}{d_P} \qquad \text{Équation 1}$$

Ri est la résistance du matériau ferromagnétique, $L_i$ sa longueur, $d_p$ la largeur d'une paroi magnétique contrôlée et $\Delta R_P$ est la mesure de résistance proprement dite de la paroi magnétique (P). A partir des mesures réalisées ci-dessus, les inventeurs ont calculé une valeur de variation relative de résistivité égale à 1,6x10$^{-3}$. Cette valeur est de l'ordre de grandeur de celles obtenues avec des structures habituelles, c'est-à-dire, des parois magnétiques non contrôlées qui sont intrinsèques au matériau ferromagnétique.

Les inventeurs ont constaté que les domaines magnétiques contrôlés sont stables à température ambiante (de l'ordre de 20°C) et que les procédés de réalisation ci-dessus fonctionnent à cette température. La variation relative de résistance est faible mais elle est absolument fiable, compte tenu de l'excellent rapport signal/bruit égal à 10$^5$ (figure 16).

En conclusion, la présente demande propose un procédé de modification de la valeur d'un dispositif résistif ferromagnétique de structure simple qui est peu coûteux à fabriquer. Des domaines magnétiques de forme, de dimensions et d'orientation magnétique contrôlées peuvent être formés et effacés selon des taux de répétition très élevés, notamment compatibles avec les dispositifs de communication optique. Un autre avantage de l'invention est la possibilité de modifier la valeur du dispositif résistif indépendamment de sa structure, selon des plages de valeurs continues qui sont adaptables aux conditions d'utilisation.

## Revendications

1. Procédé de modification de la valeur d'une résistance électrique (30), comportant un matériau ferromagnétique (31) possédant une première direction d'aimantation, comprenant les étapes suivantes :

   a) éclairement par un premier faisceau LASER (14, 14A) émis par une première source LASER (12) d'une première zone (32) du matériau ferromagnétique (31), la résistance électrique de la première zone (32) correspondant à une première valeur, le premier faisceau LASER (14) éclairant la première zone (32) de sorte que cette zone soit chauffée à une température égale ou supérieure à la température de Curie du matériau ferromagnétique (31) ;
   b) application dans la première zone (32), par l'intermédiaire de moyens d'aimantation (18), d'un champ magnétique (19) de direction opposée à la première direction d'aimantation du matériau ferromagnétique (31), l'intensité du champ magnétique (19) étant inférieure au champ coercitif du matériau ferromagnétique (31) à température ambiante ;
   c) diminution de l'énergie apportée par le premier faisceau LASER (14, 14A) à la première zone (32) afin de permettre le refroidissement de la première zone en dessous de la température de Curie du matériau ferromagnétique (31) pour former un premier domaine magnétique contrôlé (36, 36A), la valeur de la résistance électrique du premier domaine magnétique contrôlé correspondant à une deuxième valeur différente de la première valeur.

2. Procédé de modification de la valeur d'une résistance électrique (30) selon la revendication 1, dans lequel la résistance électrique (30) est connectée à une source de tension électrique (26) afin d'être traversée par un courant électrique.

3. Procédé de modification de la valeur d'une résistance électrique (30) selon la revendication 2, dans lequel le premier domaine magnétique contrôlé (36, 36A) est formé pour séparer la résistance électrique (30) en deux parties.

4. Procédé de modification de la valeur d'une résistance électrique (30) selon la revendication 3, dans lequel le premier domaine magnétique contrôlé (36, 36A) est de forme linéaire et perpendiculaire à la direction de propagation du courant électrique traversant la résistance électrique (30).

5. Procédé de modification de la valeur d'une résistance électrique (30) selon l'une des revendications 1 à 4, dans lequel, après l'étape c), un champ magnétique, de même direction que la première direction d'aimantation du matériau ferromagnétique (31) et d'intensité supérieure au champ coercitif dudit matériau, est appliqué pour effacer le premier domaine magnétique contrôlé (36, 36A), afin de modifier la valeur de la résistance électrique (30).

6. Procédé de modification de la valeur d'une résistance électrique (30) selon la revendication 5, dans lequel, après l'effacement du premier domaine magnétique contrôlé (36, 36A), les étapes de la revendication 1 sont reproduites afin de former un deuxième domaine magnétique contrôlé.

7. Procédé de modification de la valeur d'une résistance électrique (30) selon la revendication 6, dans lequel, la valeur de la résistance électrique du deuxième domaine magnétique contrôlé correspond à une troisième valeur qui est différente de la deuxième valeur associée au premier domaine magnétique contrôlé.

8. Procédé de modification de la valeur d'une résistance électrique (30) selon l'une des revendications 1 à 7, dans lequel l'étape b) est réalisée avant l'étape a).

9. Procédé de modification de la valeur d'une résistance électrique (30) selon l'une des revendications 1 à 8, dans lequel lors de l'étape b) le premier faisceau LASER (14, 14A) est déplacé par des moyens de déplacement (8, 10) sur le matériau ferromagnétique (31) afin de chauffer une zone de dimensions plus larges que la première zone (32).

10. Procédé de modification de la valeur d'une résistance électrique (30) selon l'une des revendications 1 à 9, dans lequel après l'étape c) la position entre le premier faisceau LASER (14, 14A) et le matériau ferromagnétique (31) est modifiée de sorte que le premier faisceau LASER (14) éclaire une deuxième zone, distincte de la première zone, le procédé de réalisation selon l'une des revendications 1 à 9 étant reproduit dans la deuxième zone de sorte à réaliser un deuxième domaine magnétique contrôlé distinct du premier (36B).

11. Procédé de modification de la valeur d'une résistance électrique (30) selon l'une des revendications 1 à 10, comprenant les étapes suivantes :

   1) éclairement par un second faisceau LASER (14B) du matériau ferromagnétique (31) composant la résistance électrique (30), la longueur d'onde d'émission du second faisceau LASER étant différente de celle du premier faisceau LASER (14A) ;
   2) mesure de la rotation de l'axe de polarisation du second faisceau LASER (14B) réfléchi ou transmis par la résistance électrique (30), afin de visualiser les domaines magnétiques dans le matériau ferromagnétique (31).

12. Procédé de modification de la valeur d'une résistance électrique (30) selon la revendication 11, dans lequel le premier et le second faisceau LASER sont de type impulsionnel.

13. Dispositif de contrôle (2) pour la mise en oeuvre d'un procédé de modification de la valeur d'une résistance électrique (30) selon l'une des revendications 1 à 8, comprenant :

   - des moyens de maintien (6) aptes à maintenir la résistance électrique (30) ;
   - une première source LASER (12) apte à émettre un premier faisceau LASER (14, 14A) à une première longueur d'onde et orienté vers les moyens de maintien (6) ;
   - des moyens d'aimantation (18) aptes à établir un champ magnétique (19) de direction, de sens et d'intensité contrôlés à proximité des moyens de maintien (6) ;
   - un dispositif de commande (20) contrôlant le fonctionnement de la source LASER (12) et des moyens d'aimantation (18).

14. Dispositif de contrôle (2) selon la revendication 13, comprenant des moyens de déplacements (8, 10) pour déplacer la zone (32) éclairée par le premier faisceau LASER (14) sur le matériau ferromagnétique (31), afin de réaliser les étapes d'un procédé de modification de la valeur d'une résistance électrique (30) selon la revendication 9 ou 10.

15. Dispositif de contrôle (2) selon la revendication 13 ou 14, comprenant un dispositif d'imagerie (50) comportant :

   - un moyen (12, 52) apte à émettre un second faisceau LASER (14B) orienté vers les moyens de maintien (6) à une longueur d'onde différente du premier faisceau LASER (14A) ;
   - des moyens de mesure (54, 56, 58) aptes à mesurer la rotation de l'axe de polarisation du second faisceau LASER (14B) lorsqu'il est réfléchi ou transmis par une résistance électrique (30) comportant un matériau ferromagnétique (31), maintenue par les moyens de maintien (6), afin de visualiser les domaines magnétiques dans le matériau ferromagnétique (31).

**Patentansprüche**

1. Verfahren zum Modifizieren des Werts eines elektrischen Widerstands (30), umfassend ein ferromagnetisches Material (31), das eine erste Magnetisierungsrichtung besitzt, umfassend die folgenden Schritte:

   a) Beleuchten einer ersten Zone (32) des ferromagnetischen Materials (31) mit einem ersten Laserstrahl (14, 14A), der durch eine erste Laserquelle (12) emittiert wird, wobei der elektrische Widerstand der ersten Zone (32) einem ersten Wert entspricht, wobei der erste Laserstrahl (14) die erste Zone (32) derart beleuchtet, dass diese Zone auf eine Temperatur größer oder gleich der Curie-Temperatur des ferromagnetischen Materials (31) erhitzt wird;

b) Anlegen eines magnetischen Felds (19) mit einer Richtung entgegengesetzt zur ersten Magnetisierungsrichtung des ferromagnetischen Materials (31) in der ersten Zone (32) mit Hilfe von Magnetisierungsmitteln (18), wobei die Intensität des magnetischen Felds (19) kleiner als das Koerzitivfeld des ferromagnetischen Materials (31) bei Umgebungstemperatur ist;

c) Verringern der Energie, die durch den ersten Laserstrahl (14, 14A) in die erste Zone (32) eingebracht wird, um ein Abkühlen der ersten Zone unter die Curie-Temperatur des ferromagnetischen Materials (31) zu ermöglichen, um eine erste kontrollierte magnetische Domäne (36, 36A) zu bilden, wobei der Wert des elektrischen Widerstands der ersten kontrollierten magnetischen Domäne einem zweiten Wert entspricht, der von dem ersten Wert verschieden ist.

2. Verfahren zum Modifizieren des Werts eines elektrischen Widerstands (30) nach Anspruch 1, wobei der elektrische Widerstand (30) an eine elektrische Spannungsquelle (26) angeschlossen ist, um von einem elektrischen Strom durchflossen zu werden.

3. Verfahren zum Modifizieren des Werts eines elektrischen Widerstands (30) nach Anspruch 2, wobei die erste kontrollierte magnetische Domäne (36, 36A) gebildet wird, um den elektrischen Widerstand (30) in zwei Teile zu separieren.

4. Verfahren zum Modifizieren des Werts eines elektrischen Widerstands (30) nach Anspruch 3, wobei die erste kontrollierte magnetische Domäne (36, 36A) eine lineare Form orthogonal zur Ausbreitungsrichtung des elektrischen Stroms hat, der den elektrischen Widerstand (30) durchfließt.

5. Verfahren zum Modifizieren des Werts eines elektrischen Widerstands (30) nach einem der Ansprüche 1 bis 4, wobei nach dem Schritt c) ein magnetisches Feld mit der gleichen Richtung wie die erste Magnetisierungsrichtung des ferromagnetischen Materials (31) und mit einer Intensität größer als das Koerzitivfeld des Materials angelegt wird, um die erste kontrollierte magnetische Domäne (36, 36A) zu beseitigen, um den Wert des elektrischen Widerstands (30) zu modifizieren.

6. Verfahren zum Modifizieren des Werts eines elektrischen Widerstands (30) nach Anspruch 5, wobei nach dem Beseitigen der ersten kontrollierten magnetischen Domäne (36, 36A) die Schritte von Anspruch 1 wiederholt werden, um eine zweite kontrollierte magnetische Domäne zu bilden.

7. Verfahren zum Modifizieren des Werts eines elektrischen Widerstands (30) nach Anspruch 6, wobei der Wert des elektrischen Widerstands der zweiten kontrollierten magnetischen Domäne einem dritten Wert entspricht, der von dem zweiten Wert verschieden ist, welcher der ersten kontrollierten magnetischen Domäne zugeordnet ist.

8. Verfahren zum Modifizieren des Werts eines elektrischen Widerstands (30) nach einem der Ansprüche 1 bis 7, wobei der Schritt b) vor dem Schritt a) durchgeführt wird.

9. Verfahren zum Modifizieren des Werts eines elektrischen Widerstands (30) nach einem der Ansprüche 1 bis 8, wobei während des Schritts b) der erste Laserstrahl (14, 14A) durch Verlagerungsmittel (8, 10) auf dem ferromagnetischen Material (31) verlagert wird, um eine Zone mit Abmessungen größer als die erste Zone (32) aufzuheizen.

10. Verfahren zum Modifizieren des Werts eines elektrischen Widerstands (30) nach einem der Ansprüche 1 bis 9, wobei nach dem Schritt c) die Position zwischen dem ersten Laserstrahl (14, 14A) und dem ferromagnetischen Material (31) derart modifiziert wird, dass der erste Laserstrahl (14) eine zweite Zone beleuchtet, die von der ersten Zone verschieden ist, wobei das Verfahren zur Realisierung nach einem der Ansprüche 1 bis 9 in der zweiten Zone derart wiederholt wird, dass eine zweite kontrollierte magnetische Domäne realisiert wird, die von der ersten (36B) verschieden ist.

11. Verfahren zum Modifizieren des Werts eines elektrischen Widerstands (30) nach einem der Ansprüche 1 bis 10, umfassend die folgenden Schritte:

1) Beleuchten, durch einen zweiten Laserstrahl (14B), des ferromagnetischen Materials (31), das der elektrische Widerstand (30) enthält, wobei die Emissionswellenlänge des zweiten Laserstrahls verschieden ist von jener des ersten Laserstrahls (14A);

2) Messen der Rotation der Polarisationsachse des zweiten Laserstrahls (14B), der von dem elektrischen Widerstand (30) reflektiert oder transmittiert wird, um die magnetischen Domänen in dem ferromagnetischen Material (31) zu visualisieren.

**12.** Verfahren zum Modifizieren des Werts eines elektrischen Widerstands (30) nach Anspruch 11, wobei der erste und der zweite Laserstrahl vom gepulsten Typ sind.

**13.** Steuervorrichtung (2) zur Durchführung eines Verfahrens zum Modifizieren des Werts eines elektrischen Widerstands (30) nach einem der Ansprüche 1 bis 8, umfassend:

- Haltemittel (6), die dazu ausgelegt sind, den elektrischen Widerstand (30) zu halten;
- eine erste Laserquelle (12), die dazu ausgelegt ist, einen ersten Laserstrahl (14, 14A) mit einer ersten Wellenlänge zu emittieren, der in Richtung der Haltemittel (6) orientiert ist;
- Magnetisierungsmittel (18), die dazu ausgelegt sind, ein magnetisches Feld (19) mit gesteuerter Orientierung, Richtung und Intensität in der Nähe der Haltemittel (6) aufzubauen;
- eine Befehlsvorrichtung (20), die die Funktion der Laserquelle (12) und der Magnetisierungsmittel (18) steuert.

**14.** Steuervorrichtung (2) nach Anspruch 13, umfassend Verlagerungsmittel (8, 10) zum Verlagern der durch den ersten Laserstrahl (14) auf dem ferromagnetischen Material (31) beleuchteten Zone (32), um die Schritte eines Verfahrens zum Modifizieren des Werts eines elektrischen Widerstands (30) nach Anspruch 9 oder 10 durchzuführen.

**15.** Steuervorrichtung (2) nach Anspruch 13 oder 14, umfassend eine Bildgebungsvorrichtung (50), umfassend:

- eine Einrichtung (12, 52), die dazu ausgelegt ist, einen zweiten Laserstrahl (14B), der in Richtung der Haltemittel (6) orientiert ist, mit einer Wellenlänge zu emittieren, die von dem ersten Laserstrahl (14A) verschieden ist;
- Messmittel (54, 56, 58), die dazu ausgelegt sind, die Rotation der Polarisationsachse des zweiten Laserstrahls (14B) zu messen, wenn er durch einen elektrischen Widerstand (30) reflektiert oder transmittiert wird, der ein ferromagnetisches Material (31) umfasst, und der durch die Haltemittel (6) gehalten wird, um die magnetischen Domänen in dem ferromagnetischen Material (31) zu visualisieren.

**Claims**

**1.** A method for modifying the value of an electrical resistance (30), comprising a ferromagnetic material (31) having a first magnetization direction, comprising the following steps:

a) illuminating, by a first LASER beam (14, 14A) emitted by a first LASER source (12), a first area (32) of the ferromagnetic material (31), the electrical resistance of the first area (32) corresponding to a first value, the first LASER beam (14) illuminating the first area (32) so that this area is heated at a temperature equal to or higher than the Curie temperature of the ferromagnetic material (31);
b) applying in the first area (32), through magnetization means (18), a magnetic field (19) having a direction opposite the first magnetization direction of the ferromagnetic material (31), the intensity of the magnetic field (19) being lower than the coercive field strength of the ferromagnetic material (31) at room temperature;
c) reducing the energy brought by the first LASER beam (14, 14A) to the first area (32) in order to enable the first area to be cooled below the Curie temperature of the ferromagnetic material (31) to form a first controlled magnetic domain (36, 36A), the value of the electrical resistance of the first controlled magnetic domain corresponding to a second value different from the first value.

**2.** A method for modifying the value of an electrical resistance (30) according to claim 1, wherein the electrical resistance (30) is connected to an electric voltage source (26) in order to be crossed by an electric current.

**3.** A method for modifying the value of an electrical resistance (30) according to claim 2, wherein the first controlled magnetic domain (36, 36A) is formed to separate the electrical resistance (30) into two parts.

**4.** A method for modifying the value of an electrical resistance (30) accordingto claim 3, wherein the first controlled magnetic domain (36, 36A) has a linear shape and is perpendicular to the direction of propagation of the electric current crossing the electrical resistance (30).

5. A method for modifying the value of an electrical resistance (30) according to one of claims 1 to 4, wherein, after step c), a magnetic field having the same direction as the first magnetization direction of the ferromagnetic material (31) and an intensity greater than the coercive field strength of said material, is applied to erase the first controlled magnetic domain (36, 36A), in order to modify the value of the electrical resistance (30).

6. The method for modifying the value of an electrical resistance (30) according to claim 5, wherein, after erasure of the first controlled magnetic domain (36, 36A), the steps of claim 1 are reproduced in order to form a second controlled magnetic domain.

7. The method for modifying the value of an electrical resistance (30) according to claim 6, wherein, the value of the electrical resistance of the second controlled magnetic domain corresponds to a third value which is different from the second value associated with the first controlled magnetic domain.

8. The method for modifying the value of an electrical resistance (30) according to one of claims 1 to 7, wherein step b) is performed before step a).

9. The method for modifying the value of an electrical resistance (30) according to one of claims 1 to 8, wherein during step b), the first LASER beam (14, 14A) is displaced by displacement means (8, 10) on the ferromagnetic material (31) in order to heat an area having wider dimensions than the first area (32).

10. The method for modifying the value of an electrical resistance (30) according to one of claims 1 to 9, wherein after step c), the position between the first LASER beam (14, 14A) and the ferromagnetic material (31) is modified so that the first LASER beam (14) illuminates a second area, distinct from the first area, the implementing method according to one of claims 1 to 9 being reproduced in the second area so as to produce a second controlled magnetic domain distinct from the first (36B).

11. The method for modifying the value of an electrical resistance (30) according to one of claims 1 to 10, comprising the following steps of:

> 1) illuminating, by a second LASER beam (14B), the ferromagnetic material (31) forming the electrical resistance (30), the emitting wavelength of the second LASER beam being different from the one of the first LASER beam (14A);
> 2) measuring the rotation of the polarization axis of the second LASER beam (14B) reflected or transmitted by the electrical resistance (30), in order to visualize the magnetic domains in the ferromagnetic material (31).

12. The method for modifying the value of an electrical resistance (30) according to claim 11, wherein the first and the second LASER beams are of the pulse type.

13. A control device (2) for implementing a method for modifying the value of an electrical resistance (30) according to one of claims 1 to 8, comprising:

> - holding means (6) able to hold the electrical resistance (30);
> - a first LASER source (12) able to emit a first LASER beam (14, 14A) at a first wavelength and oriented towards the holding means (6);
> - magnetization means (18) able to establish a magnetic field (19) having controlled direction and intensity near the holding means (6);
> - an operating device (20) controlling the operation of the LASER source (12) and of the magnetization means (18).

14. A control device (2) according to claim 13, comprising displacement means (8, 10) for displacing the area (32) illuminated by the first LASER beam (14) on the ferromagnetic material (31), in order to perform the steps of a method for modifying the value of an electrical resistance (30) according to claim 9 or 10.

15. The control device (2) according to claim 13 or 14, comprising an imaging device (50) including:

> - a means (12, 52) able to emit a second LASER beam (14B) oriented towards the holding means (6) at a wavelength different from the first LASER beam (14A);
> - measurement means (54, 56, 58) able to measure the rotation of the polarization axis of the second LASER beam (14B) when it is reflected or transmitted by an electrical resistance (30) comprising a ferromagnetic material (31), held by the holding means (6), in order to visualize the magnetic domains in the ferromagnetic material (31).

FIG.1

FIG.2A

FIG.2B

FIG.3

FIG.4

FIG.5

FIG.6

FIG.7

32

19

18

FIG.8

6

31

36

18

FIG.9

FIG.10

FIG.11

FIG.12A

FIG.12B

FIG.12C

FIG.13

FIG.14

FIG.15

FIG.16

## RÉFÉRENCES CITÉES DANS LA DESCRIPTION

**Documents brevets cités dans la description**

- US 6377414 B1
- US 20020029462 A1

**Littérature non-brevet citée dans la description**

- **C. BOEGLIN ; E. BEAUREPAIRE ; V. HALTÉ ; V. LOPEZ-FLORES ; C. STAMM ; N. PONTIUS ; H. A. DUERR ; J.-Y. BIGOT.** *Nature,* 27 Mai 2010, vol. 465, 458-462
- **J.-Y. BIGOT.** *C. R. Acad. Sci. Paris,* 2001, vol. 2, 1483-1504
- **A. LARAOUI ; M. ALBRECHT ; J. Y. BIGOT.** *Optics Letters,* 15 Avril 2007, vol. 32 (8), 936-938
- **E. BEAUREPAIRE ; J.-C. MERLE ; A. DAUNOIS ; J.-Y. BIGOT.** *Phys. Rev. Lett,* 27 Mai 1996, 4250-4253
- **Y. MARTIN ; H. K. WICKRAMASINGHE.** *Appl. Phys. Lett.,* 19 Mars 1987, vol. 50, 1455-1457